# FASCICULE DE BREVET EUROPEEN

(11) **EP 2 780 214 B1**
(45) Date de publication et mention de la délivrance du brevet: **03.06.2015**
(21) Numéro de dépôt: 12794367.8
(22) Date de dépôt: 25.10.2012
(51) Int. Cl.: B62D 21/15, B60K 5/12

(54) **DISPOSITIF DE PROTECTION DU MOTEUR D'UN VÉHICULE AUTOMOBILE EN CAS DE CHOC FRONTAL**
VORRICHTUNG ZUM SCHUTZ DES MOTORS EINES KRAFTFAHRZEUGS IM FALLE EINES FRONTALAUFPRALLS
DEVICE FOR PROTECTING THE ENGINE OF A MOTOR VEHICLE IN THE EVENT OF FRONTAL IMPACT

(30) Priorité: 18.11.2011 FR 1160506
(43) Date de publication de la demande: 24.09.2014
(73) Titulaire: Peugeot Citroën Automobiles SA, 78140 Vélizy Villacoublay (FR)
(72) Inventeur: DURAND, Sébastien, F-75011 Paris (FR)
(74) Mandataire: Renous Chan, Véronique
(86) Numéro de dépôt international: PCT/FR2012/052450
(87) Numéro de publication internationale: WO 2013/072589

(56) Documents cités:
- EP-A2- 1 167 125
- EP-A2- 1 997 688
- FR-A1- 2 789 031
- FR-A1- 2 921 032
- FR-A1- 2 927 863
- US-B1- 6 276 484

## Description

La présente invention concerne un dispositif de protection du moteur thermique d'un véhicule automobile, en cas de choc frontal, ledit moteur étant situé à l'avant du véhicule.

Le moteur thermique d'un véhicule automobile est généralement supporté, au moins en partie par un berceau moteur, lequel présente des caractéristiques mécaniques suffisantes, notamment en compression, pour permettre de préserver l'habitacle lors d'un éventuel choc frontal sur le véhicule. En cas d'un tel choc, le berceau moteur constitue un élément de sécurité important permettant l'absorption de l'énergie du choc. En cas de choc le moteur tend à reculer vers l'habitacle, la partie basse du carter venant en appui contre le berceau, lequel se déforme en absorbant l'énergie du choc. Il est important que le moteur bute contre le berceau ou "s'accroche" à lui afin de limiter l'intrusion du moteur dans l'habitacle. Cette fonction d'accrochage est décrite, par exemple, dans la demande de brevet FR2946935.

Cependant, certains véhicules peuvent comporter des pièces mécaniques situées entre le moteur et l'habitacle. En cas de choc, ces pièces, si elles sont rigides, peuvent heurter le moteur et le détériorer. C'est le cas par exemple des véhicules tractés par les roues avant, ces véhicules comportant un arbre de transmission en sortie de la boite de vitesses. Cet arbre, situé derrière le moteur (donc entre l'habitacle et le moteur), est relativement rigide et il est nécessaire de protéger le moteur d'un impact de cet arbre contre le moteur en cas de choc avant, le moteur pouvant être sérieusement endommagé.

Une solution connue pour pallier cet inconvénient consiste à utiliser un palier relais fixé au moteur avec un roulement sur l'arbre de transmission. Cependant cette solution est onéreuse et économiquement non intéressante pour les véhicules moins chers, souvent équipés d'un moteur de petite cylindrée. On connait par ailleurs de EP1997688A2 un absorbeur de choc par déformation d'un élément.

Un dispositif de protection contre un choc frontal appliqué à la partie avant d'un véhicule, conforme au préambule de la revendication 1, est connu de FR2789031A1, cependant ce dispositif ne protège pas la moteur de l'arbre de transmission.

La présente invention propose un dispositif permettant l'accrochage du moteur sur le berceau en cas de choc frontal, tout en assurant la protection du moteur des dommages que pourrait causer l'arbre de transmission.

De façon plus précise, l'invention concerne un dispositif de protection du moteur thermique situé à l'avant d'un véhicule automobile en cas de choc frontal, ledit véhicule étant équipé d'un berceau moteur et d'un arbre de transmission situé derrière ledit moteur, ledit dispositif comprenant un premier élément permettant d'assurer l'accroche du moteur sur le berceau moteur en cas de choc frontal. Selon l'invention, le dispositif comporte en outre un deuxième élément pour la protection du moteur de l'impact dudit arbre de transmission contre le moteur en cas de choc frontal, ledit premier élément et ledit second élément faisant partie d'une seule et même pièce, ledit deuxième élément étant situé au-dessus dudit premier élément.

Le dispositif comporte une ou plusieurs des caractéristiques suivantes:
- ledit deuxième élément est fixé au moteur thermique (par exemple au carter cylindres du moteur) et il est situé entre le moteur et l'arbre de transmission;
- ledit deuxième élément est en forme d'équerre;
- ledit premier élément a une forme sensiblement ondulée;
- la partie inférieure du premier élément comporte des moyens pour absorber les vibrations; lesdits moyens pouvant comprendre un patin élastique placé entre le carter d'huile du moteur et ledit premier élément;
- la forme du dispositif épouse sensiblement la forme de la partie du carter du moteur faisant face audit dispositif et la partie basse dudit premier élément est située à proximité du berceau;
- le dispositif est réalisé en tôle d'acier par pliage et emboutissage.

D'autres caractéristiques et avantages de l'invention apparaîtront au cours de la description qui suit d'un mode de réalisation de l'invention, donné à titre d'exemple non limitatif et en référence aux dessins annexés qui montrent, en trois dimensions:
- la figure 1, une vue en perspective d'un moteur muni du dispositif de l'invention, avec l'arbre de transmission et le berceau moteur;
- la figure 2, une vue agrandie de la partie de la figure 1 qui comprend ledit dispositif; et
- la figure 3, une vue d'une forme de réalisation du dispositif de l'invention.

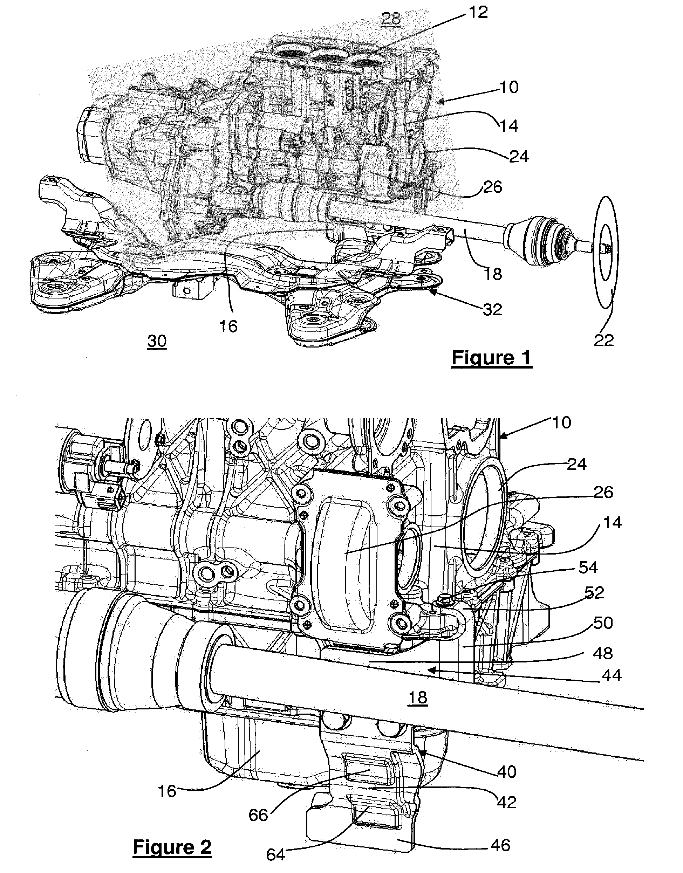

La figure 1 représente un moteur thermique 10 avec ses cylindres 12, son carter cylindres 14 et son carter d'huile 16. Le véhicule, équipé du moteur 10 étant à traction avant, comprend un arbre de transmission 18 relié à l'une de ses deux extrémités à une boite de vitesses 20 et à l'autre extrémité à une roue avant motrice 22. Le moteur comporte aussi une poulie 24 reliée à l'extrémité du vilebrequin. La pièce 26 est un cache d'un arbre d'équilibrage.

Les références 28 et 30 indiquent respectivement l'avant du véhicule et l'habitacle du véhicule. Un berceau moteur 32 est fixé au châssis du véhicule et réalisé en tôle emboutie. Le but du berceau est de protéger l'habitacle 30 en absorbant, par déformation, l'énergie d'un choc frontal du véhicule. Pendant un tel choc, le moteur a tendance à reculer vers l'habitacle; il faut alors s'assurer que le berceau empêche bien le moteur de reculer au-delà d'une certaine distance afin qu'il n'atteigne pas l'habitacle. A cette fin, une pièce d'accrochage (désignée par "premier élément" dans la description du dispositif de l'invention) est fixée au moteur et solidarise ou "accroche" le moteur au berceau lorsque le moteur recule. Par choc frontal, on entend aussi bien un choc directement au milieu de la face avant du véhicule qu'un choc sur le coté de la face avant (par exemple au niveau d'un phare).

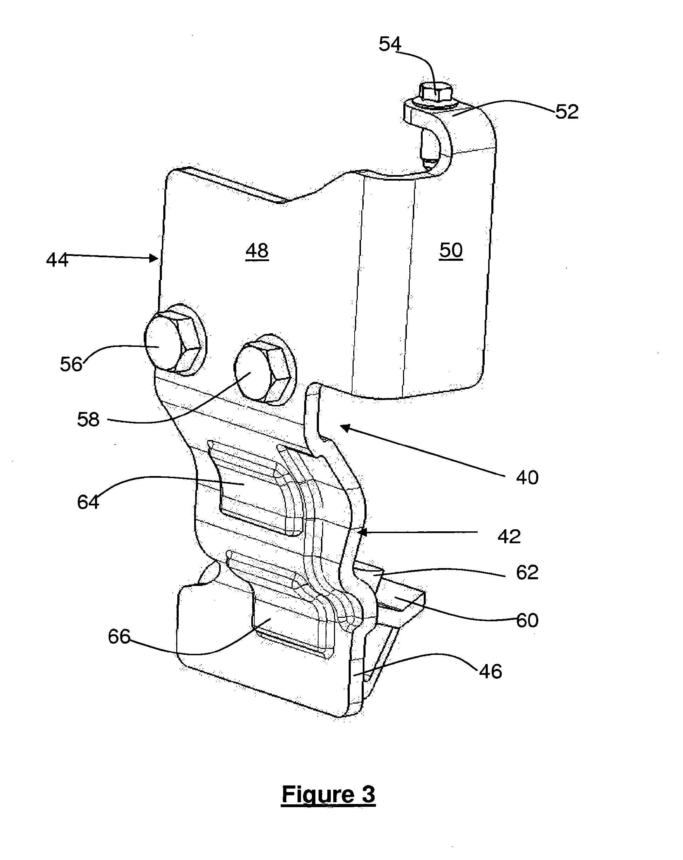

En cas de choc frontal, l'arbre de transmission 18 peut heurter le moteur 10 et l'endommager. Afin de protéger le moteur, le dispositif de l'invention 40 comprend, situé au-dessus d'un premier élément de protection 42, un deuxième élément 44 (figure 2 ou 3). Le deuxième élément 44 est fixé en regard de l'arbre de transmission 18. Il bute, en cas de choc frontal, contre l'arbre de transmission 18 protégeant ainsi le moteur. Le premier élément 42 est destiné est destiné à accrocher le moteur 10 au berceau 32 (figure 1) en cas de choc frontal et ainsi à absorber l'énergie du choc et à empêcher le moteur de reculer vers l'habitacle.

Sur la figure 3, on remarque que les deux éléments 42 et 44 sont constitués par une seule et même pièce qui forme le dispositif 40. Ce dernier est réalisé à l'aide d'une tôle par pliage et emboutissage. La forme et l'épaisseur du dispositif sont telles qu'il peut résister à un impact avec l'arbre de transmission lors d'un choc à l'avant du véhicule. Par exemple, le deuxième élément 44 peut avoir une forme d'équerre avec une partie frontale 48 et une partie latérale 50 et l'épaisseur de la tôle peut être de l'ordre de cinq mm. Le haut de la partie latérale 50 forme un crochet 52 destiné à être fixé par une vis 4 au carter cylindres 14 du moteur. Deux autres vis 56 et 58 fixent le dispositif 40 au moteur 10. Comme représenté sur la figure 2, la partie frontale 48 du deuxième élément 44 est située en regard de l'arbre de transmission 18.

Le premier élément 42 a une forme sensiblement ondulée, bien que de façon générale, la forme du dispositif 40 épouse sensiblement la forme de la partie du moteur qui lui fait face. Une pièce 60, soudée à l'extrémité inférieure 46 du premier élément 42, sert de support à un patin antivibratoire 62. Ce dernier est réalisé en un matériau élastique (par exemple, élastomère) et est coincé entre le carter du moteur et l'extrémité inférieure 46 du premier élément 42. Le premier élément 42 comporte deux éléments mécaniques dits « bulldozers » 64 et 66 destinés à s'assurer de l'accrochage du moteur sur le berceau en cas de choc.

En cas de choc frontal, le dispositif de protection 40 permet la maitrise de la cinématique du moteur ce qui est indispensable pour la préservation de l'habitacle. Dans un premier temps, le premier élément 42 assure l'accroche du moteur sur le berceau. Dans un second temps, l'arbre de transmission 18 percute le deuxième élément 44 et protège ainsi le moteur et donc également l'habitacle.

Le dispositif de protection selon la présente invention se fixe très simplement au moteur, à l'aide de trois vis. Il permet une architecture moteur sans utilisation d'un palier relais de transmission, ce qui est moins onéreux. L'invention permet aussi d'utiliser pour la conception des carters moteur des matériaux à faible tenue mécanique ce qui diminue les couts de fabrication.

## Revendications

1. Dispositif de protection (40) du moteur thermique (10) situé à l'avant d'un véhicule automobile, en cas de choc frontal, ledit véhicule comportant un berceau moteur (32) et un arbre de transmission (18) situé derrière ledit moteur, ledit dispositif comprenant un premier élément (42) permettant d'assurer l'accroche du moteur sur le berceau moteur en cas de choc frontal, ledit dispositif étant **caractérisé en ce qu'**il comporte en outre un deuxième élément (44) pour la protection du moteur de l'impact dudit arbre de transmission (18) contre le moteur (10) en cas de choc frontal, ledit premier élément (42) et ledit second élément (44) faisant partie d'une seule et même pièce, ledit deuxième élément étant situé au-dessus dudit premier élément.

2. Dispositif selon l'une des revendications précédentes **caractérisé en ce que** ledit deuxième élément (44) est fixé audit moteur thermique (10), entre le moteur et ledit arbre de transmission.

3. Dispositif selon la revendication 2, **caractérisé en ce que** ledit deuxième élément (44) est fixé au carter cylindres (14) dudit moteur.

4. Dispositif selon l'une des revendications précédentes **caractérisé en ce que** ledit deuxième élément (44) a sensiblement la forme d'une équerre.

5. Dispositif selon l'une des revendications précédentes **caractérisé en ce que** ledit premier élément (42) a sensiblement une forme ondulée.

6. Dispositif selon la revendication 5, **caractérisé en ce que** la partie inférieure (46) du premier élément comporte des moyens (62) pour absorber les vibrations.

7. Dispositif selon la revendication 6, **caractérisé en ce que** lesdits moyens comprennent un patin élastique (62) placé entre le carter d'huile (16) du moteur et ledit premier élément (42).

8. Dispositif selon l'une des revendications précédentes **caractérisé en ce que** sa forme suit la forme de la partie du carter (14, 16) dudit moteur faisant face audit dispositif (40) et **en ce que** la partie basse (46) dudit premier élément est située à proximité du berceau.

9. Dispositif selon l'une des revendications précédentes **caractérisé en ce qu'**il est réalisé en tôle d'acier par pliage et emboutissage.

## Patentansprüche

1. Vorrichtung zum Schutz (40) der Brennkraftmaschine (10), die sich an der Vorderseite eines Kraftfahrzeugs befindet, bei einem Frontalaufprall, wobei das Fahrzeug eine Maschinenhalterung (32) und eine Getriebewelle (18), die sich hinter der Maschine befindet, umfasst, wobei die Vorrichtung ein erstes Element (42) umfasst, das es erlaubt das Halten der Maschine an der Halterung bei einem Frontalaufprall sicherzustellen, Vorrichtung **dadurch gekennzeichnet, dass** sie außerdem ein zweites Element (44) für den Schutz der Maschine vor dem Aufprall der Getriebewelle (18) gegen die Maschine (10) bei einem Frontalaufprall umfasst, wobei das erste Element (42) und das zweite Element (44) zu ein und demselben Teil gehören, wobei das zweite Element oberhalb des ersten Elements liegt.

2. Vorrichtung nach dem vorhergehenden Anspruch, **dadurch gekennzeichnet, dass** das zweite Element (44) an der Brennkraftmaschine (10) zwischen der Maschine und der Getriebewelle befestigt ist.

3. Vorrichtung nach Anspruch 2, **dadurch gekennzeichnet, dass** das zweite Element (44) an dem Zylindergehäuse (14) der Maschine befestigt ist.

4. Vorrichtung nach einem der vorhergehenden Ansprüche, **dadurch gekennzeichnet, dass** das zweite Element (44) im Wesentlichen die Form eines Winkels hat.

5. Vorrichtung nach einem der vorhergehenden Ansprüche, **dadurch gekennzeichnet, dass** das erste Element (42) im Wesentlichen eine wellige Form hat.

6. Vorrichtung nach Anspruch 5, **dadurch gekennzeichnet, dass** der untere Teil (46) des ersten Elements Mittel (62) zum Absorbieren der Schwingungen umfasst.

7. Vorrichtung nach Anspruch 6, **dadurch gekennzeichnet, dass** die Mittel eine elastische Gleitbacke (62) umfassen, die zwischen der Ölwanne (16) der Maschine und dem ersten Element (42) platziert ist.

8. Vorrichtung nach einem der vorhergehenden Ansprüche, **dadurch gekennzeichnet, dass** ihre Form der Form des Teils des Gehäuses (14, 16) der Maschine, die der Vorrichtung (40) gegenüberliegt, folgt, und dass der untere Teil (46) des ersten Elements in der Nähe der Halterung liegt.

9. Vorrichtung nach einem der vorhergehenden Ansprüche, **dadurch gekennzeichnet, dass** sie aus Stahlblech durch Falten und Stanzen hergestellt ist.

## Claims

1. A protection device (40) for the heat engine (10) located in the front of a motor vehicle, in the event of frontal impact, said vehicle comprising an engine subframe (32) and a driveshaft (18) located behind said engine, said device including a first element (42) capable of ensuring that the engine connects to the engine subframe in the event of frontal impact, said device being **characterized in that** it additionally comprises a second element (44) for protecting the engine from the impact of said driveshaft (18) against the engine (10) in the event of frontal impact, said first element (42) and said second element (44) forming part of one and the same piece, said second element being located above said first element.

2. The device according to one of the preceding claims, **characterized in that** said second element (44) is fixed to said heat engine (10), between the engine and said driveshaft.

3. The device according to Claim 2, **characterized in that** said second element (44) is fixed to the cylinder block (14) of said engine.

4. The device according to one of the preceding claims, **characterized in that** said second element (44) has substantially the shape of an angle bracket.

5. The device according to one of the preceding claims, **characterized in that** said first element (42) has substantially an undulating shape.

6. The device according to Claim 5, **characterized in that** the lower part (46) of the first element comprises means (62) for absorbing the vibrations.

7. The device according to Claim 6, **characterized in that** said means include an elastic pad (62) placed between the oil sump (16) of the engine and said first element (42) .

8. The device according to one of the preceding claims, **characterized in that** its shape follows the shape of the part of the casing (14, 16) of said engine facing said device (40) and **in that** the lower part (46) of said first element is located close to the subframe.

9. The device according to one of the preceding claims, **characterized in that** it is produced in sheet steel by bending and stamping.
